# EUROPEAN PATENT APPLICATION

(11) **EP 2 887 287 A1**
(43) Date of publication of application: **24.06.2015**
(21) Application number: 13306756.1
(22) Date of filing: 18.12.2013
(51) Int. Cl.: G06Q 10/10, H04L 12/58

(54) **Email system**

(71) Applicant: ALCATEL LUCENT, 92100 Boulogne-Billancourt (FR)
(72) Inventor: Thepaut, Ronan, 29806 BREST (FR); Grostete, Yann, 29806 BREST (FR)
(74) Representative: Raets, David

(57) **Abstract**

An email communication module, adapted to send and receive emails to and from one or more recipients via an email exchange server, said module comprising a processor configured to :
(a) analyze each email received to identify a common email exchange conversation between said received email and previously received emails,
(b) determine an indication of state of the email exchange conversation belonging to said received email, and
(c) processes said email conversation according to:
- predetermined rules,
- the content of said received email, and
- said indication of state of said email conversation.

## Description

### TECHNICAL FIELD

The present invention relates to email systems.

### BACKGROUND

This section introduces aspects that may be helpful in facilitating a better understanding of the invention. Accordingly, the statements of this section are to be read in this light and are not to be understood as admissions about what is in the prior art or what is not in the prior art.

A large, and increasing, amount of personal and business communication is exchanged over email exchange systems.

Email users typically receive many emails, each having a different importance, related to vastly different subjects, and having different response requirements: some are for information, others conclude an email exchange, and yet others require specific action from the user.

Sometimes it is not clear if there is a conclusion: even if the mail thread could have no more activity, does it mean a conclusion was reached, or is the email waiting on an action from a recipient?

There are manual best practices, such as keeping a separate document detailing specific actions to carry out in relation to an email thread.

Other practices include the "Inbox Zero"^{®} philosophy, but such practices are better suited to certain email systems and less to others.

A technological solution is sought to address this situation.

### SUMMARY

In view of the foregoing, an embodiment herein provides for an email communication module, adapted to send and receive emails to and from one or more recipients via an email exchange server, said module comprising a processor configured to
(a) analyze each email received to identify a common email exchange conversation between said received email and previously received emails,
(b) determine an indication of state of the email exchange conversation belonging to said received email,
(c) processes said email conversation according to:
   - predetermined rules,
   - the content of said received email, and
   - said indication of state of said email conversation.

An advantage of this embodiment is that it is automatic and objective and does not depend on human factors.

Additionally, for some users who are part of the email exchange as cc: participants (for example for organizational reasons - directors put in copy because the mail exchange is between several departments), often their only interest is to know that a conclusion has been found and they are not directly concerned by details. This system can help them to watch the thread progress with greater efficiency.

Another embodiment provides for a method of analyzing email communications, comprising the steps of :
(a) receiving an email from an email server;
(b) determining an email exchange conversation in which said received email is part of;
(c) determining an indication of state from information contained in said received email
(d) process said received email in function of:
   - one or more predetermined rules,
   - the content of said received email, and
   - said indication of state of said email conversation.

In yet another aspect, there is provided a computer program product adapted to execute a method of analyzing email communications as stated hereabove.

These and other aspects of the embodiments herein will be better appreciated and understood when considered in conjunction with the following description and the accompanying drawings.

### BRIEF DESCRIPTION OF THE FIGURES

Figure 1 is a schematic illustration of an email system according to an embodiment.
Figure 2 is a call flow diagram of the system of figure 1 according to an embodiment.
Figures 3 to 6 illustrate four different use cases for the system of figure 1.

### DETAILED DESCRIPTION OF EMBODIMENTS

The embodiments herein and the various features and advantageous details thereof are explained more fully with reference to the non-limiting embodiments that are illustrated in the accompanying, drawings and detailed in the following description. Descriptions of well known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the samples should not be construed as limiting the scope of the embodiments herein.

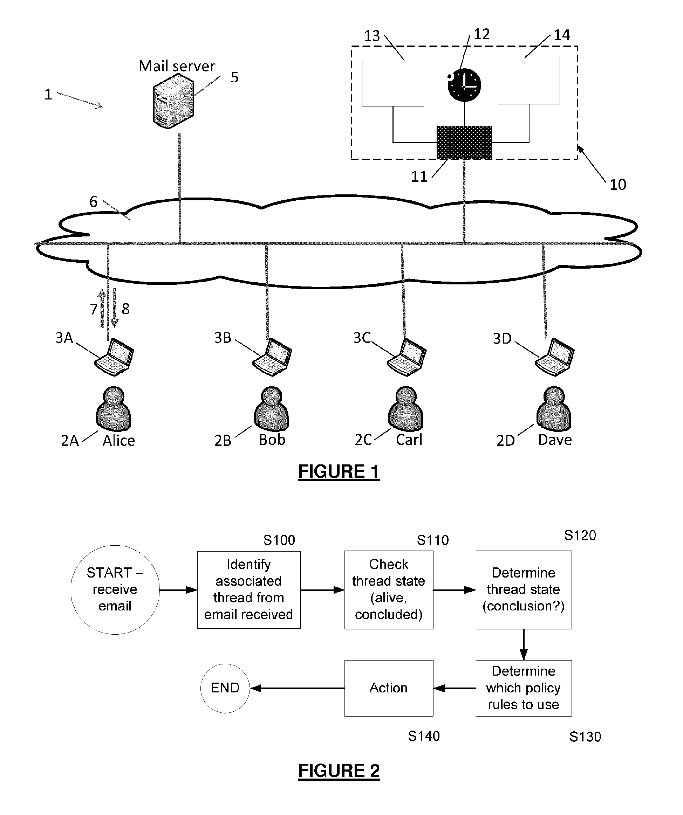

Figure 1 illustrates schematically an email system 1 comprising a plurality of user accounts 2 loaded on respective terminals 3 and an email server 5. Of course, although user accounts 2 are represented by figurines, user accounts are in fact physically present on the email server 5, and are remotely accessed by an end user on the terminals 3.

Four user accounts 2A-2D are illustrated, each with an email access terminal 3A-3D configured for sending and receiving email communications to and from the server 5. Each terminal 3 may be an autonomous terminal machine such as is often the case with POP3-type of servers, or the terminals may be virtual IMAP-type terminals, or they may be a mix of different types of email communication servers. The terminal 3 comprises a mail user agent (MUA) adapted to access and manage a user's email account 2.

The suffixes A-D will be used hereinafter when referring to a specific instance of the account 2 or the terminal 3, or other specific elements. Else, the general element will be referred to instead, encompassing all instances of the said element.

As mentioned above, each user account corresponds to an email account on the server 5, and as such each user account corresponds to a unique email address: user account 2A may be attributed Alice@company.com, user account 2B may be attributed Bob@company.com, etc.

Each terminal 3 is in communication with the server 5 over a wired or wireless communication network 6. The communication network 6 may be a global network of communication such as Internet or a private communication network such as intranet. Each terminal 3 has an uplink connection 7 to the server 5 adapted for sending emails composed on the terminal 3 to one or more recipient. Furthermore, each terminals 3 has a downlink connection 8 from the server 5 adapted to receive emails from the server 5 sent from other user accounts to a recipient's terminal.

The server 5 comprises the hardware adapted to carry out at least the two following infrastructure functionalities:
- mail delivery agent (MDA), adapted for the delivery of e-mail messages to a local recipient's mailbox ;
- mail transfer agent (MTA), in charge of transmitting email from MTA to MTA, or from MTA to MDA.
If, for scalability or organizational reasons, there are multiple physical servers, MTAs, etc, then the server 5 refers to the global mail server infrastructure.

The server 5 is adapted to receive an email communication message addressed to one or more recipients from a user account 2, entered on terminal 3, processed and sent in individual copies of said email to each of said one or more recipients, here also represented by users 2.

More particularly, each terminal 3 is adapted to draft an email message (also known as an email body), and to specify a list of recipients to whom the email message is to be routed. The terminal 3 communicates the email over the uplink connection 7 via the communication network 6 to the server 5. The server 5 then forwards to email to all the specified recipients via the communication network 6 over the downlink connection 8. The server 5 operation is commonly known to the skilled person and will not be entered in any detail here.

The system 1 further comprises an email analysis terminal module (EAM) 10 in communication with the server 5 via the network 6. The role of the EAM 10 is to monitor email conversations (also known as email thread or email exchange) for a conclusion and timely remind participants to email threads of an unconcluded email exchange, in such as way as to not let an email thread in a suspended state without activity and without conclusion. Email conversations are generally between the same recipients, and are on the same subject: a conversation comprises all the email threads responsive to an original email. Google® and others implement this concept of email thread conversation in their proprietary products.
It is to be noted that monitoring email conversation does not imply the need to have conversation "views", ie. that emails are grouped according to conversations. Indeed, implementation could either have emails displayed by groups or not on terminals 3.

The EAM 10 comprises:
- An email agent 11 adapted for receiving emails addressed to it (more details below) and sending communication alerts and/or information; said agent 11 further being configured to analyze email communications addressed to the EAM 10;
- A rules modules 13 containing a set of rules defining how the email agent 11 should process email conversations; and
- A watched thread module 14 containing a list of the watched threads to be able to relaunch inactive and non-concluded threads. This module comprises information as to the current state of email threads being watched, and may comprises last email exchange date.

A timer 12 may also be configured to provide a timeout service for a defined email thread and for a determined time period.

As is apparent from the above, users of terminals 3A to 3B choose freely when to include the EAM 10 recipient address when sending emails, in function of whether they require tracking and analysis of the email conversation.

A particular advantage of this embodiment is that this EAM applies to all types of email systems, without requiring particular APIs or plugins. Indeed, the EAM 10 is invoked simply by including the EAM 10 in the list of recipients.

However, as an alternative embodiment, EAM may be integrated within the server 5, or integrated into any recipient's terminal such that sending email to that terminal the EAM is automatically invoked.

The email agent 11 is similar in functionality to a user account 2 and terminal 3, in so far as this is what it looks like from the perspective of the server 5. Indeed, email agent 11 is attributed an email address also, of the type agent@company.com

The email agent 11 communicates with the server 5 over the communication network 6 like with any other terminal 3.

The email agent 11 is configured to analyze email communications addressed to the EAM 10 and for which it is a recipient, more particularly for which the email agent 11 is a recipient, and to determine whether the email discussion has reached a conclusion.

The rules module 13 stores parameters of analysis to determine the conclusion of an email conversation thread.

For example, parameters extracted from email conversation threads to be applied against rules may for example be one or more of the following:
- The time of receipt of an email
- The identity of the sender, and who the other recipients are
- The state of the email chain, in particular whether analysis indicates that a response is on standby for a particular recipient, or whether no further action is required and therefore the email thread is "concluded".
- The number of exchanges without apparent conclusion

The parameters in the rules module 13 may be:
- Predetermined at installation
- Set by the user manually. For example, these may be set by transmission in an email with particular rule information in the SUBJECT line or in predetermined parts of the email BODY
- Learned by an automatic learning algorithm, based on actions the users perform

For example, according to an exemplary embodiment, the rules module 13 may contain one or more of the following rules:
- a mail with [CONCLUSION] in the subject is a conclusion mail
- a mail with [RULES] in the subject is a rules mail (this is a way to change the rule applicable to a email thread)
- it is forbidden (or not) to exchange mail on a concluded thread
- it is authorized (or not) to add a new conclusion on a concluded thread
- it is authorized (or not) to restart a concluded thread by a restart mail
- an alert should be sent if there is no more mail exchange on an alive thread (timeout: parameter could be different for each thread, could take into account working days) -an alert should be sent if there is a target date specified in the email body
- a acknowledgement mail is sent (or not) when a conclusion is reached or a thread is restarted

In a variant, it is possible to distinguish global rules and thread-specific rules. For instance, the global rule may be "it is forbidden to add a new conclusion". But there is another rule: "for thread X, it is authorized to add a new conclusion".

The agent 11 also maintains in the watched thread module 14 a database of email threads under its analysis with indication of the state of the email discussion. Email threads are referenced or tracked for example with unique thread IDs.

This module holds a reference of whether the email thread is concluded or not, and what actions the processor 12 is waiting on to conclude the thread.

For example, associated to each email thread may be one or more of the following state: "alive" or "concluded".

More particularly, as illustrated in conjunction with figure 2, the EAM 10 is configured to analyze emails as follows.
First the EAM 10 needs to identify email threads from individual emails received (step S100). There are two known ways of doing so:
- following the RFC2822 standard which is based on Message_ID and References header fields contained in the email message; or
- following Microsoft® Outlook® practice, which is based on Thread-topic and Thread-Index header fields.

Subsequently, the EAM 10 looks for the thread state: whether it is a live thread, or concluded thread or a new thread to take into account (step S110).

At step S120, the EAM 10 analyses the email content received and the thread as a whole to determine whether a conclusion has been reached. This may be performed by algorithms able to determine a conclusion from keywords present in the email content, or may be indicated by users themselves, for example by appending the "[CONCLUSION]" keyword in the subject line.

Next, at step S130, the EAM 10 polls the rules module 13 to determine what policy rules are associated with the particular email thread in question. Rules can be specific for an email thread or generic for all email threads.

Finally, at step S 140, the EAM 10 then can action updates, which may include one or more of the following steps:
- EAM 10 updates the last exchanged email date, which will influence if and when email reminders are sent to the users
- EAM 10 updates the status of the email thread, eg from "alive" to "concluded", or signal a restart (from"concluded to "alive")
- EAM 10 he can send an alert mail if a mail is exchanged on a concluded thread, if the corresponding rules exist

Once the email agent 11 determines that an email thread is concluded with sufficient certainty, due to time out, action fulfillment, or other, the email agent 11 may decide to:
- Notify the parties by email
- Append a CONCLUDED sign, or similar, to all concerned email thread.
- Etc.

Similarly, the EAM 10 may decide, in function of the content of the rules module 13, to send out a reminder email that the email thread is not concluded yet. In such a case, it may send an email to one or more of the original email recipients notifying that a response or an action is due to be performed.

Alternatively, the EAM 10 may also determine that an email thread is closed, and therefore close all open events in its action list. EAM may also communicate with the recipients of a particular email informing them that a particular email thread is deemed to be concluded, and that they may archive the emails.

It is to be noted that in a variant of the above embodiment, it is possible for the user may specify certain information to be handled by the EAM 10. For example,
- A user may specify a "respond-by" date or time
- A user may specify from which recipient a response is expected.

These will be entered in as rules in the rules database 13 for that particular email thread. These may be cumulative to other rules, or may be exclusive.

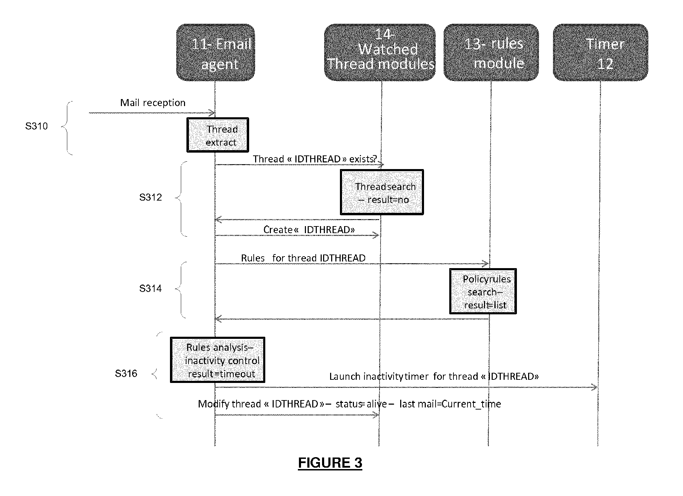

Figures 3 to 8 illustrates particular exemplary use cases of the embodiment of figures 1 and 2.

Figure 3 illustrates the case when an email is received and does not belong to a previously processed email thread. The policy rule in this case may be for example to impose a 24h waiting period for responses.

In this example, if the mail agent 11 receives an email in which it is a recipient (ie. agent@company.com is a recipient of the email). Upon receipt of the email, the email agent 11 extracts identifying information from the email (step S310), for example by exracting Message_ID and Reference fields according to RFC 2822. This identifying information is stored in variable "IDTHREAD".

Next, at step S312, the email agent 11 polls the watched thread module 14 to verify the existence of the IDTHREAD in the database. Its existence would signify that the email received is part of a conversation already being tracked. In the present embodiment, since the email is new, the watched thread module 14 returns no results. A new thread identity is therefore created in the watched thread module 14.

Step S314 represents the email agent 11 polling the rules module 13 for policy rules that are to be applied to the concerned IDTHREAT. The rules module 13 returns all the rules applicable for the particular email conversation.

Step S316 represents the email agent 11 executing on each of the rules returned at step S314. In particular, a rule that is applied is for a timeout to be put in place, which will wait a predetermined amount of time, say 24 hours, before taking further action. The timer 12 is therefore launched with the IDTHREAD reference, which will delay any further notification concerning this thread for the defined time period. The "last modified" email parameter is also updated in the watched thread module 14.

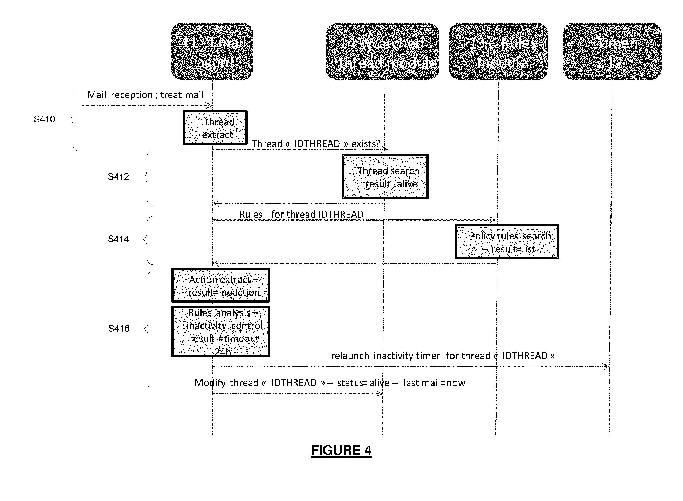

Figure 4 illustrates the case when an email is received and the email is part of an email conversation which is already being tracked by the EAM 10. The policy rule in this case may be for example to impose a 24h waiting period for further responses.

In this example, the mail agent 11 receives an email, and from which the email agent 11 extracts identifying information from the email (step S410), for example by exracting Message_ID and Reference fields according to RFC 2822. This identifying information is stored in variable "IDTHREAD".

Next, at step S412, the email agent 11 polls the watched thread module 14 to verify the existence of the IDTHREAD in the database. Its existence would signify that the email received is part of a conversation already being tracked. In the present embodiment, since the email is part of an existing email conversation, the watched thread module 14 returns a result indicating that the thread is being watched already (it is "alive").

Step S414 represents the email agent 11 polling the rules module 13 for policy rules that are to be applied to the concerned IDTHREAT. The rules module 13 returns all the rules applicable for the particular email conversation.

Step S416 represents the email agent 11 executing on each of the rules returned at step S414. In particular, a rule that is applied is for a further timeout to be put in place, which will wait a predetermined amount of time, say 24 hours, before taking further action. The timer 12 is therefore relaunched with the IDTHREAD reference, which will delay any further notification concerning this thread for the defined time period. The "last modified" email parameter is also updated in the watched thread module 14 since an email was received in this case.

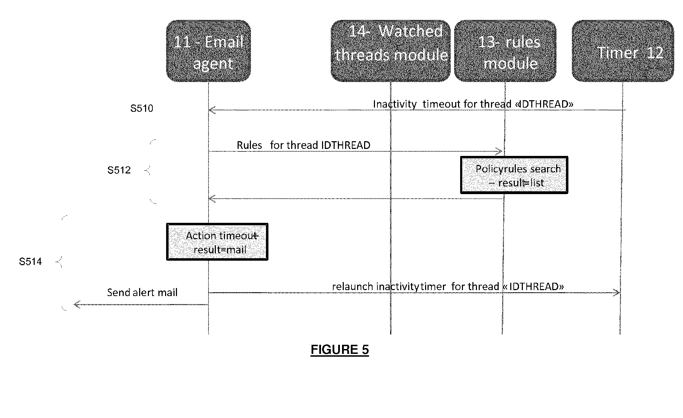

Figure 5 illustrates the case when email conversation inactivity is detected. This is for example because a timer 12 was activated for a particular email thread and no responses were received in this time by the EAM 10. The policy rule in this case may be for example to send an alert email to all recipients of the email thread.

In this example, the timer 12 detects a timeout of a particular IDTHREAD, which is notified to the email agent 11.

Step S512 represents the email agent 11 polling the rules module 13 for policy rules that are to be applied to the concerned IDTHREAT in light of the timeout triggered from no response of the email thread. The rules module 13 returns all the rules applicable for the particular email conversation.

Step S514 represents the email agent 11 executing on each of the rules returned at step S512. In particular, a rule that is applied is for an alert email to be sent to the recipients of the email thread to alert them of a possible unconcluded email thread. An alert email is therefore sent and the timer 12 is relaunched with the IDTHREAD reference, which will delay any further notification concerning this thread for the defined time period.

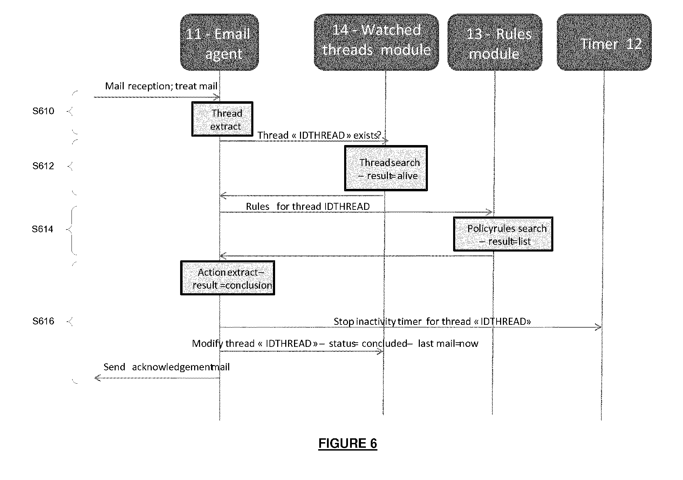

Figure 6 illustrates the case when an email is received and the email indicates the conclusion of the email thread. The policy rule in this case may be for example to acknowledge the conclusion and cancel all timers on the email thread.

In this example, the mail agent 11 receives an email, and from which the email agent 11 extracts identifying information from the email (step S610), for example by extracting Message_ID and Reference fields according to RFC 2822. This identifying information is stored in variable "IDTHREAD". Along with this thread identity, the email agent 11 is configured to analyse the email body for indications of conclusion of the subject. As described herebefore, this analysis may be performed using semantic algorithms or by placing keywords in predetermined places, such as "[CONCLUSION]" in the subject line.

Next, at step S612, the email agent 11 polls the watched thread module 14 to verify the existence of the IDTHREAD in the database. Its existence would signify that the email received is part of a conversation already being tracked. In the present embodiment, since the email is part of an existing email conversation, the watched thread module 14 returns a result indicating that the thread is being watched already (it is "alive").

Step S614 represents the email agent 11 polling the rules module 13 for policy rules that are to be applied to the concerned IDTHREAT with the CONCLUSION flag detected. The rules module 13 returns all the rules applicable for the particular email conversation.

Step S616 represents the email agent 11 executing on each of the rules returned at step S614. In particular, a rule that is applied is for the pending timeout to be cancelled. The timer 12 is cancelled with the IDTHREAD reference, which will cancel any further timer trigger. The "last modified" email parameter is also updated in the watched thread module 14 since an email was received in this case, and an acknowledgement email is sent to all recipients indicating the detection of a conclusion and the end of further email monitoring.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. An email communication module (10), adapted to send and receive emails to and from one or more recipients via an email exchange server (5), said module comprising a processor configured to :
(a) analyze each email received to identify a common email exchange conversation between said received email and previously received emails,
(b) determine an indication of state of the email exchange conversation belonging to said received email, and
(c) processes said email conversation according to:
- predetermined rules,
- the content of said received email, and
- said indication of state of said email conversation.

2. An email module according to claim 1, wherein said indication of state comprises determining whether the email received is part of an email exchange conversation which is ongoing, or whether the received email concludes an email exchange conversation.

3. An email module according to any one of the preceding claims, wherein the indication of state comprises one or more of the following values: alive, timeout, concluded.

4. An email module according to any one of the preceding claims, wherein said predetermined rules comprises one or more of the following rules: setting a timeout parameter.

5. An email module according to any one of the preceding claims, wherein said predetermined rules includes alerting at least one of the recipients to the email to the indication of state of the email exchange conversation.

6. A method of analyzing email communications, comprising the steps of :
(a) receiving an email from an email server (5);
(b) determining an email exchange conversation in which said received email is part of;
(c) determining an indication of state from information contained in said received email
(d) process said received email in function of:
- one or more predetermined rules,
- the content of said received email, and
- said indication of state of said email conversation.

7. A method according to claim 6, wherein the step of determining an indication of state comprises the state of parsing the email for an indication that the email offers a conclusion to an email exchange.

8. A method according to any one of preceding claims 6 to 7, wherein said predetermined rules includes setting a timeout parameter.

9. A computer program product adapted to execute a method according to claim 6.
